# EUROPÄISCHE PATENTSCHRIFT

(11) **EP 2 614 092 B1**
(45) Veröffentlichungstag und Bekanntmachung des Hinweises auf die Patenterteilung: **16.07.2014**
(21) Anmeldenummer: 11754363.7
(22) Anmeldetag: 05.09.2011
(51) Int. Cl.: C08F 210/00, C08F 212/00, C08F 220/00, C08F 222/00, C08F 230/08

(54) **TERPOLYMERISAT AUS ELEKTRONENDEFIZIENTEN OLEFINEN, OLEFINEN OHNE ELEKTRONENZIEHENDE SUBSTITUENTEN UND ALKOXYVINYLSILANEN**
TERPOLYMER FORMED FROM ELECTRON-DEFICIENT OLEFINS, OLEFINS WITHOUT ELECTRON-WITHDRAWING SUBSTITUENTS AND ALKOXYVINYLSILANES
TERPOLYMÈRE À BASE D'OLÉFINES DÉFICITAIRES EN ÉLECTRONS, D'OLÉFINES SANS SUBSTITUANTS ACCEPTEURS D'ÉLECTRONS ET D'ALCOXYVINYLSILANES

(30) Priorität: 07.09.2010 EP 10175519
(43) Veröffentlichungstag der Anmeldung: 17.07.2013
(73) Patentinhaber: BASF SE, 67056 Ludwigshafen (DE)
(72) Erfinder: LANGE, Arno, 67098 Bad Dürkheim (DE); SCHEIBITZ, Matthias, 69469 Weinheim (DE); PRUSTY, Manoranjan, 68167 Mannheim (DE)
(86) Internationale Anmeldenummer: PCT/EP2011/065294
(87) Internationale Veröffentlichungsnummer: WO 2012/032005

(56) Entgegenhaltungen:
- EP-A2- 0 280 761
- WO-A1-91/18032
- DE-A1- 19 902 454
- JP-A- 6 107 871
- JP-A- 61 211 363
- US-A- 3 467 634

## Beschreibung

Die vorliegende Erfindung betrifft ein neues Polymerisat, welches neben Kohlenwasserstoffeinheiten Siloxangruppen aufweist. Es handelt sich um ein Terpolymerisat, welches durch Copolymerisation von
(A) 1 bis 70 Gew-% mindestens eines elektronendefizienten Olefins,
(B) 1 bis 85 Gew-% mindestens eines Isobutenhomo- oder -copolymerisates mit einem zahlenmittleren Molekulargewichts Mₙ von 100 bis 500 000, welches an seiner olefinischen Doppelbindung nur Wasserstoffatome und/oder Kohlenstoffatome ohne elektronenziehende Substituenten trägt, und
(C) 1 bis 70 Gew-% mindestens eines Alkoxyvinylsilans,
wobei die Summe der Gew-% der Komponenten (A), (B) und (C) 100 Gew-% ergibt, erhältlich ist.

Weiterhin betrifft die vorliegende Erfindung ein Verfahren zur Herstellung dieses Terpolymerisates sowie Folgeprodukte dieses Terpolymerisates, welche durch thermische Vernetzung, durch hydrolytische Vernetzung, durch Modifizierung mit Alkoholen und/oder Aminen oder durch Behandeln mit wässriger oder alkoholischer Alkalimetallhydroxid-Lösung oder wässriger oder alkoholischer Amin-Lösung erhältlich sind.

Polymerisate mit Kohlenwasserstoffketten und Siloxangruppen können vernetzen und sind damit Ausgangsstoffe für Kleb- oder Dichtmassen oder für Mittel zur Oberflächen-modifikation. Solche Produkte sind daher von großem industriellen Interesse.

Es sind verschiedene Herstellverfahren allgemein für Polymerisate mit Kohlenwasserstoffketten und Siloxangruppen bekannt. So wird in der US 6 177 519 (1) die Propfung eines Polyolefins mit einem Vinylsiloxan beschrieben. Kennedy und Ivan beschreiben in Carbocationic Macromolecular Engineering, Hanser-Verlag, 1991, Seite 142, 143, 174 und 175, (2) die lebende kationische Polymerisation von 2-Methylpropen, wobei der Abbruch der Reaktion mit einem Allylsilan vorgenommen wird, und die anschließende Hydrosilylierung des α,ω-Diens. Aus der US 6 194 597 (3) ist weiterhin die Copolymerisation von Isobuten mit Silylstyrol oder Silylmethylstyrol bekannt. Allen diesen Verfahren ist gemeinsam, dass sie technisch aufwendig sind, weil sie mehrstufig ablaufen und/oder große Wärmemengen in der Polymerisation bei tiefen Temperaturen abgeführt werden müssen und/oder weil spezielle Agenzien, die oft nicht kommerziell erhältlich sind, eingesetzt werden müssen.

Es war daher überraschend, dass solche Polymerisate mit Kohlenwasserstoffketten und Siloxangruppen in einer bislang nicht bekannten einstufigen Reaktion aus kommerziell erhältlichen Monomeren mit nur geringem Energieaufwand, d.h. in der Regel ohne Kühlung, hergestellt werden können. Gegenstand der vorliegenden Erfindung ist somit das eingangs genannte Terpolymerisat, welches durch einfache Copolymerisation der Komponenten (A), (B) und (C) erhältlich ist.

Copolymerisate von Vinylalkoxysilanen mit Anhydriden ungesättigter Säuren wie Maleinsäureanhydrid sind aus der US 3 560 589 (4) bekannt. Dort werden solche Copolymerisate als Bestandteile von Epoxidharzen beschrieben.

Copolymerisate von Vinyltrialkoxysilanen mit Maleinsäureanhydrid, welche teilweise oder vollständig zu den entsprechenden Halbestern umgewandelt vorliegen, sind aus der DE-A 27 30 008 (5) bekannt. Dort werden solche Copolymerisate zur Herstellung reaktiver Silylverbindungen, die als Haftvermittler, Überzugsmassen oder Filtrierhilfsmittel eingesetzt werden können, empfohlen.

In der WO 95/07944 (6) werden Terpolymerisate aus (a) 20 bis 60 Mol-% mindestens einer monoethylenisch ungesättigten C₄- bis C₆-Dicarbonsäure oder deren Anhydrid, (b) 10 bis 70 Mol-% mindestens eines Oligomeren des Propens oder eines verzweigten 1-Olefins mit 4 bis 10 Kohlenstoffatomen wie Oligoisobuten und (c) 1 bis 50 Mol-% mindestens einer monoethylenisch ungesättigten Verbindung, die mit den Monomeren (a) und (b) copolymerisierbar ist, beschrieben. Als in Betracht kommende monoethylenisch ungesättigte Verbindungen werden lineare 1-Olefine, ungesättigte Monocarbonsäuren, Vinyl- und Allylalkylether, Ester von ungesättigten Mono- oder Dicarbonsäuren, Vinyl- und Allylester von gesättigten Monocarbonsäuren, N-Vinylcarbonsäureamide sowie N-Vinylverbindungen von stickstoffhaltigen Heterocyclen genannt.

Co- und Terpolymerisate, wie sie beispielsweise in den Dokumenten (4), (5) und (6) beschrieben werden, weisen bezüglich ihrer stofflichen und/oder anwendungstechnischen Eigenschaften aber noch ein Verbesserungspotential auf. Es bestand daher auch die Aufgabe, neue polymere Systeme bereitzustellen, welche in ihren stofflichen und/oder anwendungstechnischen Eigenschaften noch mehr Verbesserungsmöglichkeiten, Flexibilität und Spielräume für die diversen denkbaren Anwendungen in der Technik beinhalten. Demgemäß wurde das eingangs definierte Terpolymerisat gefunden.

Beim erfindungsgemäßen Terpolymerisat bewirkt hauptsächlich die Monomerkomponente (C) die gewünschte Verbesserung in den stofflichen und/oder anwendungstechnischen Eigenschaften des Polymerisates.

Als Komponente (A) werden üblicherweise solche Olefine als Monomere eingesetzt, welche in α -Stellung zur olefinischen Doppelbindung einen oder mehrere elektronenziehende Substituenten tragen, die (zum Beispiel über die Konjugation der π-Elektro-nensysteme) die Elektronendichte der olefinischen Doppelbindung herabsetzen. In einer bevorzugten Ausführungsform trägt das mindestens eine elektronendefiziente Olefin der Komponente (A) an seiner olefinischen Doppelbindung mindestens einen, insbesondere einen oder zwei, elektronenziehenden Substituenten ausgewählt aus der Gruppe -CO- (Carbonyl), -CN (Cyano), -NO₂ (Nitro) und - SO₂- (Sulfo). Die Gruppe -CO- ist dabei in der Regel Bestandteil einer Ketofunktion, einer Aldehydfunktion oder vor allem einer Carboxylfunktion in Form beispielsweise einer freien Carbonsäure, eines Carbonsäure-esters, eines Carbonsäureamids, eines Carbonsäureimids oder eines cyclischen oder nicht-cyclischen Carbonsäureanhydrids. Die Gruppe -SO₂- ist dabei in der Regel Bestandteil einer Sulfonfunktion, einer Sulfonsäure, eines Sulfonsäureesters, eines Sulfonsäureamids oder eines Sulfonsäureimids.

Typische Beispiele für derartige elektronendefiziente Olefine der Komponente (A) sind Acrylsäure, deren Ester wie Methylacrylat, Ethylacrylat oder n-Butylacrylat, deren Amide und deren Imide, Acrylnitril, Methacrylsäure, deren Ester wie Methylmethacrylat, Ethylmethacrylat oder n-Butylmethacrylat, deren Amide und deren Imide, Methacrylnitril, Maleinsäure, deren Mono- und Diester wie Monomethylmaleat, Dimethylmaleat, Monoethylmaleat oder Diethylmaleat, deren Mono- und Diamide, deren Imide, deren Mono- und Dinitril sowie Fumarsäure, deren Mono- und Diester wie Monomethylfumarat, Dimethylfumarat, Monoethylfumarat oder Diethylfumarat, deren Mono- und Diamide und deren Mono- und Dinitril. Als Esteralkoholreste und als mögliche Substituenten an den genannten Amiden und Imiden kommen hauptsächlich C₁- bis C₂₀-Alkylreste in Betracht. Es können auch Mischungen der genannten elektronendefizienten Olefine als Komponente (A) eingesetzt werden.

Ganz besonders bevorzugt wird ein Terpolymerisat, welches aus mindestens einem Anhydrid einer monoethylenisch ungesättigten C₄- bis C₆-Dicarbonsäure als Komponente (A) erhältlich ist. Es kommen hier insbesondere die eine cyclische Struktur aufweisenden Anhydride von Fumarsäure, Itaconsäure, Mesaconsäure, Methylenmalonsäure, Citraconsäure und vor allem Maleinsäure in Betracht.

Als Komponente (B) werden üblicherweise solche Isobutenhomo- oder -copolymerisate als Monomere eingesetzt, welche in α-Stellung zur olefinischen Doppelbindung nur Kohlenstoffatome ohne elek-tronenziehende Substituenten, und/oder Wasserstoffatome tragen. Die Elektronendichte der olefinischen Doppelbindung ist hier nicht wie bei der Komponente (A) über eine Konjugation mit einem π-Elektronensysteme einer Carbonyl- (-CO), Cyano- (-CN), Nitro- (-NO₂) oder Sulfogruppe (-SO₂-) herabgesetzt. Es handelt sich bei der Komponente (B) meist um reine Kohlenwasserstoffverbindungen, die allenfalls in größerer Entfernung zur olefinischen Doppelbindung, also in der β-Stellung oder noch weiter entfernt, einen elektronenziehenden Substituenten wie -CO-, -CN, -NO₂ oder -SO₂- tragen können. Es können auch Mischungen der genannten nicht-elektronende-fizienten Olefine als Komponente (B) eingesetzt werden.

Von den α-Olefin-Polymerisaten ist Polyisobuten von besonderer Bedeutung, da es ein handelsübliches und in der Technik häufig eingesetztes Material ist. Die Herstellung von Polyisobuten durch Polymerisation von Isobuten mit Lewis-Säuren wie Aluminium-trichlorid, Bortrifluorid oder Titantetrachlorid als Katalysator ist seit langem bekannt. Je nach Reaktionstemperatur, Katalysator und Reinheit des eingesetzten Isobutens erhält man niedrigmolekulares, mittelmo-lekulares oder hochmolekulares Polyisobuten. Ein Überblick über Verfahren zur Polyisobuten-Herstellung findet sich auch in Ullmann's Encyclopedia of Industrial Chemistry, 5th Edition, Vol. A 21, 1992, Seite 555 bis 561. Kennedy und Ivan beschreiben in "Carbocationic Macromolecular Engineering", Hanser-Verlag, 1991, weitere Verfahren (lebende Polymerisation) zur Herstellung von Polyisobuten. Neben den reinen Isobutenhomopolymerisaten sind auch Isobutencopolymerisate als Komponente (B) von Bedeutung.

Die Ausführungsform der vorliegenden Erfindung ist ein Terpolymerisat, welches aus einem Isobutenhomo- oder -copolymerisat mit einem zahlenmittleren Molekulargewicht Mₙ von 100 bis 500.000, vorzugsweise von 120 bis 50.000, insbesondere von 350 bis 20.000, vor allem von 500 bis 2500, als Komponente (B) erhältlich ist. Unter den Begriff "Isobutenhomopolymerisat" fallen im Rahmen der vorliegenden Erfindung auch oligomere Isobutene, wie dimeres, trimeres, tetrameres, pentameres, hexameres und heptameres Isobuten.

Als Isobutenhomo- bzw. -copolymerisat kann prinzipiell jedes gängige und kommerziell erhältliche Polyisobuten eingesetzt werden. Gängige und kommerziell erhältliche Poly-isobutene sind meist Isobutenhomopolymerisate oder Isobutencopolymerisate mit einem überwiegenden Anteil an Isobuteneinheiten [-CH₂-C(CH₃)₂-]. Vorzugsweise wird ein sogenanntes "reaktives" Polyisobuten eingesetzt. "Reaktive" Polyisobutene unterscheiden sich von den "niedrigreaktiven" Polyisobutenen durch einen höheren Gehalt an terminal angeordneten Doppelbindungen. So enthalten reaktive Polyisobutene wenigstens 50 Mol.-%, bezogen auf die Gesamtanzahl an Polyisobuten-Makromoleküleinheiten, solche terminal angeordnete Doppelbindungen. Besonders bevorzugt sind Polyisobutene mit wenigstens 60 Mol.-% und insbesondere mit wenigstens 80 Mol.-%, bezogen auf die Gesamtantanzahl an Polyisobuten-Makromoleküleinheiten, terminal angeordneten Doppelbindungen. Bei den terminal angeordneten Doppelbindungen kann es sich sowohl um Vinyldoppelbindungen [-CH=C(CH₃)₂] (β-Olefin) als auch um Vinyliden-Doppelbindungen [-CH-C(=CH₂)-CH₃] (α-Olefin) handeln.

Eine bevorzugte Ausführungsform der vorliegenden Erfindung ist ein Terpolymerisat, welches aus einem Isobutenhomo- oder -copolymerisat mit einem Gehalt an endständigen Vinyliden-Doppelbindungen von mindestens 60 %, insbesondere von mindestens 80 Mol-%, als Komponente (B) erhältlich ist.

Es werden meist Isobutenhomo- bzw. -copolymerisate eingesetzt, die einheitliche oder weitgehend einheitliche Polymergerüste aufweisen. Darunter werden im Rahmen der vorliegenden Erfindung üblicherweise solche Polymerisate verstanden, die zu wenigstens 85 Gew.-%, vorzugsweise zu wenigstens 90 Gew.-% und insbesondere zu wenigstens 95 Gew.-% aus Isobuteneinheiten [-CH₂-C(CH₃)₂-] aufgebaut sind.

Weiterhin weisen die als Komponente (B) eingesetzten Isobutenhomo- oder -copolymerisate üblicherweise einen Polydispersitätsindex (PDI) von 1,05 bis 10, insbesondere 1,05 bis 4, vor allem 1,05 bis 2,0, auf. Unter Polydispersität versteht man den Quotienten aus gewichtsmittlerem Molekulargewicht M_{w} und zahlenmittlerem Molekulargewicht Mn (PDI = M_{w}/Mₙ).

Unter Isobutenhomo- oder -copolymerisaten werden im Rahmen der vorliegenden Erfindungen auch alle durch kationische oder lebende kationische Polymerisation erhältlichen Polymerisate verstanden, die vorzugsweise wenigstens 60 Gew.-% Isobuten, besonders bevorzugt wenigstens 80 Gew.-%, stärker bevorzugt wenigstens 90 Gew.-% und vor allem wenigstens 95 Gew.-% Isobuten einpolymerisiert enthalten. Daneben können diese Polymerisate weitere Butenisomere wie 1- oder 2-Buten sowie davon verschiedene olefinisch ungesättigte Monomere, die mit Isobuten unter kationischen Polymerisationsbedingungen copolymerisierbar sind, einpolymerisiert enthalten.

Als Isobuten-Einsatzstoffe für die Herstellung von Isobutenhomo- oder -copolymerisaten, die als Edukte für die vorliegende Erfindung dienen können, eignen sich dementsprechend sowohl Isobuten selbst als auch isobutenhaltige C₄-Kohlenwasserstoffströme, beispielsweise C₄-Raffinate, C₄-Schnitte aus der Isobuten-Dehydrierung, C₄-Schnitte aus Steamcrackern, FCC("Fluid Catalyzed Cracking")-Crackern, sofern sie weitgehend von darin enthaltenem 1,3-Butadien befreit sind. Besonders geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial können die von Isobuten verschiedenen Kohlenwasserstoffe die Rolle eines inerten Lösungsmittels übernehmen.

Als unter kationischen Polymerisationsbedingungen copolymerisierbare Monomere für Isobutencopolymeriate kommen Vinylaromaten wie Styrol und α-Methylstyrol, C₁- bis C₄-Alkylstyrole wie 2-, 3- und 4-Methylstyrol sowie 4-tert.-Butylstyrol, Isoolefine mit 5 bis 10 C-Atomen wie 2-Methylbuten-1, 2-Methyl-penten-1, 2-Methylhexen-1, 2-Ethylpenten-1, 2-Ethylhexen-1 und 2-Propylhepten-1 in Betracht.

Als Komponente (B) geeignete Polyisobutene sind alle durch gängige kationische oder lebende kationische Polymerisation erhältlichen Isobutenhomo- oder -copolymeriate. Bevorzugt sind jedoch so genannte "reaktiven" Polyisobutene, die vorstehend beschrieben wurden.

Kommerziell verfügbare und als Komponente (B) geeignete Polyisobutene sind beispielsweise die Glissopal®-Marken der BASF SE wie Glissopal 550, Glissopal 1000 und Glissopal 2300 (wobei die Glissopal-Marken reaktive Polyisobutene darstellen) sowie die Oppanol®-Marken der BASF SE wie Oppanol B10, B12 und B15.

Als Alkoxyvinylsilane eignen sich für die Monomerkomponente (C) vorzugsweise Verbindungen mit der allgemeinen Formel

R¹R²C=CR³-Si(R⁴)ₘ(OR⁵)₃₋ₘ (I)

in der m die Zahl 0, 1 oder 2 bezeichnet, R¹, R², R³, R⁴ und R⁵ gleich oder verschieden sein können und für C₁- bis C₂₀-Alkyl-, C₅- bis C₂₀-Cycloalkyl-, C₆- bis C₂₀-Aryl- oder C₇-bis C₂₀-Aralkylreste stehen, wobei R¹, R², R³ und R⁴ auch Wasserstoff bedeuten können.

Für den Zweck der Erläuterung der vorliegenden Erfindung, insbesondere für die Spezifizierung der Komponenten (A) und (C), umfasst der Ausdruck "C₁- bis C₂₀-Alkyl" entsprechende geradkettige und verzweigte Alkylgruppen. Vorzugsweise handelt es sich dabei um geradkettige oder verzweigte C₁- bis C₁₀-Alkyl-, insbesondere C₁-C₈-Alkyl-und vor allem C₁- bis C₄-Alkylgruppen. Beispiele für derartige Alkylgruppen sind Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl- 2-methylpropyl, n-Heptyl, 2-Heptyl, 3-Heptyl, 2-Ethylpentyl, 1-Propylbutyl, n-Octyl, 2-Ethylhexyl, 2-Propylheptyl, n-Nonyl und n-Decyl.

Weiterhin eignen sich als derartige Alkylreste auch analoge Hydrocarbylreste, die durch Heteroatome wie beispielsweise Sauerstoff unterbrochen sein oder aromatische oder heterocyclische Ringe inkorporiert haben können.

Der Ausdruck "C₅- bis C₂₀-Cycloalkyl" umfasst im Sinne der vorliegenden Erfindung unsubstituierte als auch substituierte Cycloalkylgruppen, vorzugsweise C₅- bis C₇-Cycloalkylgruppen wie Cyclopentyl, Cyclohexyl oder Cycloheptyl. Diese können im Falle einer Substitution 1, 2, 3, 4 oder 5, vorzugsweise 1, 2 oder 3 Substituenten tragen. Diese Substituenten sind dann üblicherweise die oben genannten Alkylreste.

Der Ausdruck "C₆- bis C₂₀-Aryl" umfasst im Sinne der vorliegenden Erfindung unsubstituierte als auch substituierte aromatische Reste wie Phenyl, o-, m- oder p-Tolyl, Xylyl oder Naphthyl. Auftretende Substituenten sind hier üblicherweise die oben genannten Alkylreste.

Der Ausdruck "C₇- bis C₂₀-Aralkyl" umfasst im Sinne der vorliegenden Erfindung durch aromatische Reste substituierte Alkylgruppen wie Benzyl, o-, m- oder p-Methylbenzyl, 1-Phenylethyl, 2-Phenylethyl, 3-Phenylpropyl oder 4-Phenylbutyl.

Die Alkoxyvinylsilane der Monomerkomponente (C) tragen neben dem gegebenenfalls durch R¹, R² und/oder R³ substituierten Vinylrest mit einer polymerisationsfähigen ethylenischen Doppelbindung einen, zwei oder drei Reste -OR⁵, welche vorzugsweise C₁-bis C₂₀-Alkyloxyreste, insbesondere C₁- bis C₈-Alkyloxyreste, vor allem C₁- bis C₄-Alkyl-oxyreste sind, die gleich oder verschieden sein können, wobei übrige, noch freie Valenzen des Siliziumatoms, wenn solche auftreten, vorzugsweise durch C₁- bis C₄-Alkyl, C₅- bis C₇-Cycloalkyl, Phenyl und/oder Wasserstoff als Substituenten R⁴ abgesättigt sind.

In einer bevorzugten Ausführungsform ist das erfindungsgemäße Terpolymerisat aus mindestens einem Trialkoxyvinylsilan der allgemeinen Formel la

H₂C=CH-Si(OR⁵)₃ (Ia)

in der alle drei Alkoxyreste gleich sind und R⁵ die oben genannte Bedeutung hat, als Komponente (C) erhältlich.

Besonders bevorzugte Vertreter der Verbindungen la sind Tri-(C₁- bis C₂₀-alkyloxy)-vinylsilane, insbesondere Tri-(C₁- bis C₈-alkyloxy)vinylsilane, vor allem Tri-(C₁- bis C₄-alkyloxy)vinylsilane, in denen der Ausdruck "alkyl" die oben genannte Bedeutung von C₁- bis C₂₀-Alkylresten sowie analogen Hydrocarbylresten, die durch Heteroatome wie beispielsweise Sauerstoff unterbrochen sein oder aromatische oder heterocyclische Ringe inkorporiert haben können, hat.

Typische Beispiele für Verbindungen der allgemeinen Formel I sind Vinyltrimethoxysilan, Vinyltriethoxysilan, Vinyltripropoxysilan, Vinyltriisopropoxysilan, Vinyltributoxysilan, Vinyl-tris(β-methoxyethoxy)silan, Vinylmethyldiethoxysilan, Vinylethyldimethoxysilan, Vinylcyclohexyldimethoxysilan, Vinylphenyldimethoxysilan, Vinyldimethylmonoethoxysilan und Vinylmethylphenyl-monoethoxysilan.

Vorzugsweise ist das erfindungsgemäße Terpolymerisat erhältlich durch Copolymerisation von
(A) 5 bis 60 Gew.-%, insbesondere 10 bis 40 Gew.-%, mindestens eines elektronen-defizienten Olefins,
(B) 5 bis 80 Gew.-%, insbesondere 15 bis 70 Gew.-%, mindestens eines Isobutenhomo- oder-copolymerisates mit einem zahlenmittleren Molekulargewicht Mₙ von 100 bis 500.000, welches an seiner olefinischen Doppelbindung nur Wasserstoffatome und/oder Kohlenstoffatome ohne elektronenziehende Substituenten trägt, und
(C) 5 bis 60 Gew.-%, insbesondere 15 bis 50 Gew.-%, mindestens eines Alkoxyvinylsilans, wobei die Summe der Gew.-% der Komponenten (A), (B) und (C) jeweils 100 Gew.-% ergibt.

Insbesondere ist das erfindungsgemäße Terpolymerisat erhältlich durch Copolymerisation von
(A) 5 bis 60 Gew.-%, insbesondere 10 bis 40 Gew.-%, mindestens eines Anhydrides einer monoethylenisch ungesättigten C₄- bis C₆-Dicarbonsäure,
(B) 5 bis 80 Gew.-%, insbesondere 15 bis 70 Gew.-%, eines Isobutenhomo- oder -copolymerisates mit einem zahlenmittleren Molekulargewicht Mₙ von 100 bis 500.000, und
(C) 5 bis 60 Gew.%, insbesondere 15 bis 50 Gew.-%, mindestens eines Alkoxyvinylsilans,
wobei die Summe der Gew.-% der Komponenten (A), (B) und (C) 100 Gew.-% ergibt.

In einer bevorzugten Ausführungsform hat das erfindungsgemäße Terpolymerisat einen im Wesentlichen alternierenden Strukturaufbau. Dabei wechselt in der Polymerkette üblicherweise eine Monomereinheit (A) jeweils mit einer Monomereinheit (B) oder mit einer Monomereinheit (C) ab. Vorzugsweise sind die Monomereinheit (B) und (C) dabei statistisch verteilt. Dabei stehen die Monomereinheiten (A) mit der Summe von (B) und (C) meist in einem Verhältnis von 0,9 zu 1,1 bis 1,1 zu 0,9.

In einer anderen Ausführungsform können die Monomereinheiten statistischer verteilt sein. So können die elektronendefizienten Olefine (A) im Überschuß vorliegen, wobei die Monomereinheiten (A) mit der Summe von (B) und (C) in einem Verhältnis von mehr als 1,1 zu 0,9 bis 1,5 zu 0,5 stehen. Weiterhin können die elektronendefizienten Olefine (A) aber auch im Unterschuß vorliegen, wobei die Monomereinheiten (A) mit der Summe von (B) und (C) in einem Verhältnis von weniger als 0,9 zu 1,1 bis 0,5 zu 1,5 stehen.

Das erfindungsgemäße Terpolymerisat hat in der Regel ein zahlenmittleres Molekulargewicht Mₙ von 500 bis 2.000.000, insbesondere von 750 bis 200.000, vor allem von 1000 bis 75.000 (bestimmt durch die Analytische Ultrazentrifuge).

Das erfindungsgemäße Terpolymerisat weist in der Regel einen Polydispersitätsindex (PDI) von 1,5 bis 15, insbesondere von 2,0 bis 12, vor allem von 2,5 bis 8, auf.

Das erfindungsgemäße Terpolymerisat kann - je nach Gehalt an Monomereinheiten der Komponente (B) - als sprödes Harz [vornehmlich bei niedrigen Gehalten an (B)], als viskoses Öl oder weiches Harz [vornehmlich bei hohen Gehalten an (B)] vorliegen.

Das nachfolgende Formelschema soll beispielhaft die Bildung eines typischen Vertreters des erfindungsgemäßen Terpolymerisates veranschaulichen (n = um 2 verringerte Anzahl der Isobuteneinheiten im eingesetzten Polyisobuten; PIB = Reststruktur der Polyisobuteneinheit):

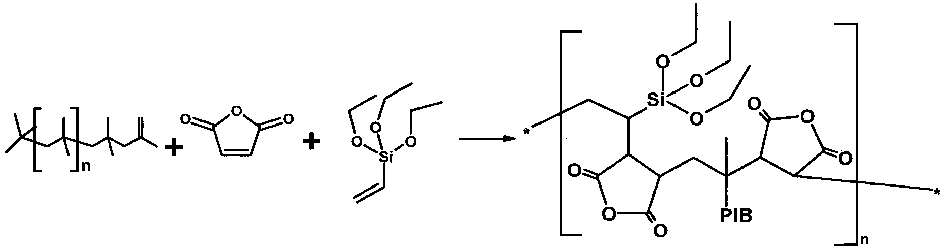

Gegenstand der vorliegenden Erfindung ist auch ein Verfahren zur Herstellung des erfindungsgemäßen Terpolymerisates, welches dadurch gekennzeichnet ist, dass man die Komponenten (A), (B) und (C) in Substanz, in Lösung oder in Suspension radikalisch miteinander copolymerisiert.

Die Methoden der radikalischen Substanz-, Lösungs- und Suspensionspolymerisation sind dem Fachmann hinlänglich bekannt und brauchen hier daher nicht in aller Ausführlichkeit erläutert zu werden. Exemplarisch wird auf Übersichtsliteratur wie Houben-Weyl, Methoden der organischen Chemie, 4. Auflage, G. Thieme Verlag, Band 14 und Ergänzungsband E20, und auf die dort zitierte Originalliteratur verwiesen. Auf den Seiten 15-73 des Bandes E20 werden chemische Starter für die radikalische Polymerisation genannt und auf den Seiten 74-93 desselben Bandes wird das Auslösen einer Polymerisation mit energiereicher Strahlung beschrieben. Eine weitere diesbezügliche Zusammenfassung ist das Handbook of Polymer Synthesis, 2nd Edition, erschienen 2005 im Marcel Dekker Verlag. Nachfolgend sollen jedoch diejenigen Verfahrensparameter angesprochen werden, welche für die Durchführung der radikalischen Substanz-, Lösungs- oder Suspensionspolymerisation der Komponenten (A), (B) und (C) zum erfindungsgemäßen Terpolymerisat kritisch sein können.

Bei allen genannten Polymerisationsverfahren wird in aller Regel unter Ausschluß von Sauerstoff gearbeitet, vorzugsweise in einem Stickstoffstrom. Man führt die Polymerisation üblicherweise bei Temperaturen von 0 bis 150°C, insbesondere bei 20 bis 130°C, vor allem bei 40 bis 120°C, und bei einem Druck von 0,5 bis 10 bar, insbesondere 0,7 bis 1,3 bar, durch. Die Polymerisation kann kontinuierlich oder diskontinuierlich durchgeführt werden. Bei der Lösungs- und der Suspensionspolymerisationsmethode verwendet man zweckmäßigerweise ein unter Polymerisationsbedingungen nicht reaktives Lösungsmittel, zum Beispiel einen Kohlenwasserstoff wie Toluol oder Xylol, einen halogenierten Kohlenwasserstoff wie Dichlormethan oder eine Mischung hieraus als Lösungs- bzw. Suspendierungsmittel. In einer anderen Variante verwendet man gezielt Lösungsmittel (auch im Gemisch), die unter Polymerisationsbedingungen reagieren können (z.B. Ketone wie Aceton oder Butanon), um Radikalketten abzubrechen und so das Molekulargewicht einzustellen.

Hierbei geeignete Polymerisationsinitiatoren sind beispielsweise Peroxidverbindungen wie tert.-Butylperoxybenzoat, tert.-Butylperpivalat, tert.-Butylperneodecanoat, tert.-Butylperethylhexanoat, tert.-Butylperisobutyrat, Di-tert.-butylperoxid, Di-tert.-amylper-oxid, Diacetylperoxidicarbonat oder Dicyclohexylperoxidicarbonat oder Azoverbindungen wie 2,2'-Azobis(isobutyro-nitril). Diese Polymerisationsinitiatoren können allein oder in Mischung miteinander eingesetzt werden. Die Polymerisation kann aber auch durch Strahlung, beispielsweise durch ultraviolettes Licht, durch Gamma- oder durch Laserstrahlung, ausgelöst werden.

Gegenstand der vorliegenden Erfindung ist als Folgeprodukt des erfindungsgemäßen Terpolymerisates auch ein thermisch vernetztes Terpolymerisat, welches durch Erhitzen des erfindungsgemäßen Terpolymerisates auf Temperaturen über 80°C (zum Beispiel auf 100°C bis 120°C oder auf 120°C bis 150°C) für mindestens 10 Minuten erhältlich ist. Hierbei wird keine nennenswerte Menge Alkohol abgespalten und die Vernetzung erfolgt in der Regel weitgehend durch Ausbildung von Si-O-Si-Brücken; möglicherweise abgespaltene Alkoxygruppen werden durch die Dicarbonsäureanhydrid-Gruppierungen abgefangen, welche dabei zu Carboxylat-Gruppierungen ringgeöffnet werden. Da Wasser in diesem Schritt nicht benötigt wird, kann Feuchtigkeitsausschluß vorteilhaft sein.

Das nachfolgende Formelschema soll beispielhaft eine typische Struktur eines solchen thermisch vernetzten Terpolymerisates veranschaulichen (PIB = Reststruktur der Polyisobuteneinheit):

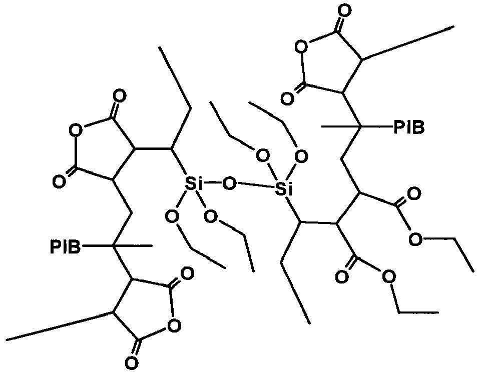

Gegenstand der vorliegenden Erfindung ist als Folgeprodukt des erfindungsgemäßen Terpolymerisates weiterhin auch ein modifiziertes Terpolymerisat, welches durch Umsetzung des erfindungsgemäßen Terpolymerisates mit ein- oder mehrwertigen Alkoholen und/oder ein- oder mehrwertigen Aminen erhältlich ist. Die Alkohole und Amine werden, beispielsweise über die Gasphase oder in flüssiger Form durch Benetzung oder Besprühung, in entsprechenden, meist geringen Mengen mit dem erfindungsgemäßen Terpolymerisat in Kontakt gebracht; man kann die Alkohole oder Amine aber auch mit einer Lösung des erfindungsgemäßen Terpolymerisates in einem inertem Lösungsmittel wie Toluol in Kontakt und zur Umsetzung bringen. Die Umsetzungsdauer beträgt dabei wenige Minuten bis wenige Tage und wird mit Aminen üblicherweise bei Temperaturen von 10°C bis 60°C vorgenommen, während sich im Falle der Alkohole ein Bereich von 50°C bis 120°C bewährt hat. Hierbei wird in der Regel die Vernetzung durch Ausbildung von Si-O-Si-Brücken noch nicht bewirkt. Als Alkohole können hierbei beispielsweise Methanol, Ethanol, Propanol, iso-Propanol, tert.-Butanol, Methoxyethanol, Ethylenglykol oder Glycerin, als Amine beispielsweise Monobutylamin, Diethylamim, Trimethylamin, Triethylamin, Ethylendiamin, 3-(N,N-Dimethylamino)-propylamin oder auch Alkanolamine wie Triethanolamin oder Triisopropanolamin eingesetzt werden. Die Alkohole und Amine können auch noch weitere funktionelle Gruppierungen wie Siloxangruppen zur weiteren Modifizierung des Polymerisates enthalten. Beispiele hierfür sind 3-Aminopropyl-triethoxysilan, 3-Aminoethyl-triethoxysilan und 3-Aminopropyl-trimethoxysilan.

Ebenso können Polyethylenoxide oder Polypropylenoxide in einem Molekulargewichtsbereich von 200 bis 10.000 eingesetzt werden. In einem Fall sind die Polymerketten difunktionell, also an beiden Enden mit einer -OH-Gruppe oder -NH₂-Gruppe terminiert, das Polymer ist difunktionell. In einem anderen Fall ist ein Ende verethert, R-O- (wobei R für einen beliebigen Kohlenwasserstoffrest steht) stellt also ein Kettenende dar, wobei das andere Ende -OH oder -NH₂ sein kann, diese Polymere sind monofuktionell.

Die Umsetzung monofunktioneller (einwertiger) Amine und Alkohole läuft zunächst im wesentlichen ohne Vernetzung ab, da in Lösung weder Gelbildung noch Ausfällungen auftreten. Durch längeres Erhitzen zum Beispiel über 1 bis 3 oder 2 bis 8 Stunden auf höhere Temperaturen, zum Beispiel auf 50°C bis 90°C oder auf 70°C bis 150°C, kann als Folgereaktion auch eine Vernetzung unter Ausbildung von Si-O-Si Bindungen stattfinden. Das nachfolgende Formelschema soll beispielhaft eine typische Struktur eines solchen substituierten Terpolymerisates mit ringgeöffneten Anhydrid-Gruppierungen veranschaulichen. (PIB = Reststruktur der Polyisobuteneinheit):

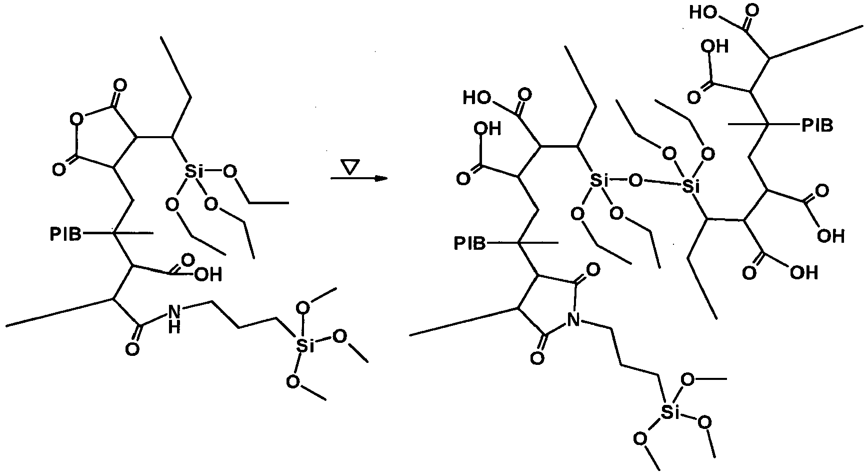

Gegenstand der vorliegenden Erfindung ist als Folgeprodukt des erfindungsgemäßen Terpolymerisates weiterhin auch ein hydrolytisch vernetztes Terpolymerisat, welches durch Umsetzung des erfindungsgemäßen Terpolymerisates mit Wasser erhältlich ist. Das Wasser kann dabei in Form von Wasserdampf, Luftfeuchtigkeit oder geringen Mengen flüssigen Wassers mit dem erfindungsgemäßen Terpolymerisat in Kontakt gebracht werden. Die Umsetzungsdauer beträgt dabei wenige Minuten bis wenige Tage und wird üblicherweise bei Temperaturen von 10°C bis 60°C vorgenommen. Hierbei wird in der Regel die Vernetzung ebenfalls weitgehend durch Ausbildung von Si-O-Si-Brücken bewirkt; in der Folge werden dann die Dicarbonsäureanhydrid-Gruppierungen hydrolytisch zu Carboxylat-Gruppierungen ringgeöffnet, wobei sich freie Carboxylgruppen ausbilden.

Das nachfolgende Formelschema soll beispielhaft eine typische Struktur eines solchen hydrolytisch vernetzten Terpolymerisates mit ringgeöffneten Anhydrid-Gruppierungen mit vorausgehender Vernetzung über Si-O-Si-Brücken veranschaulichen (PIB = Reststruktur der Polyisobuteneinheit):

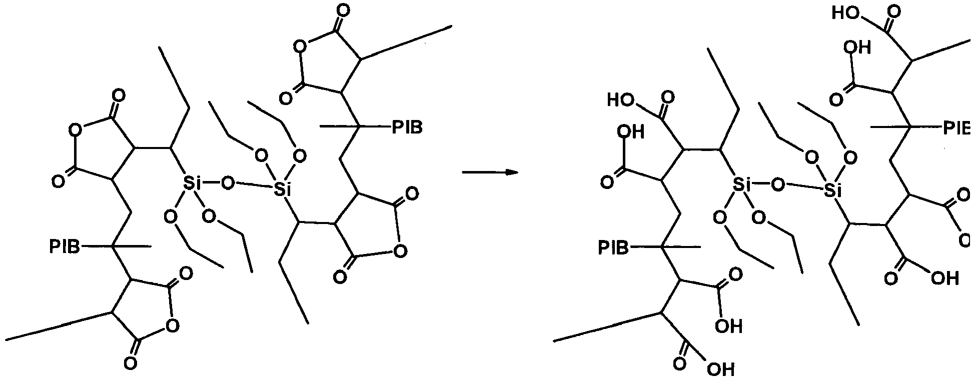

Bei der Umsetzung polyfunktioneller (zwei- oder mehrwertiger) Amine und Alkohole findet die Vernetzung einfach statt; es werden in Lösung Gelbildung und Ausfällungen beobachtet.

Gegenstand der vorliegenden Erfindung ist als Folgeprodukt des erfindungsgemäßen Terpolymerisates weiterhin auch ein über Polyamine und/oder Polyole vernetztes Terpolymerisat, welches durch Umsetzung des erfindungsgemäßen Terpolymerisates mit Polyaminen (mehrwertigen Aminen) und/oder Polyolen (mehrwertigen Alkoholen) erhältlich ist. Die Umsetzungsdauer beträgt dabei wenige Minuten bis wenige Tage und wird üblicherweise bei Temperaturen von 10°C bis 140°C vorgenommen. Hierbei werden dann in der Regel die Dicarbonsäureanhydrid-Gruppierungen zu Carbonamid- oder Carbonester-Gruppierungen ringgeöffnet, wodurch Vernetzung bewirkt wird. Dabei können die Carbonamidgruppen auch mit einer freien Carbonsäure zu Imiden cyclisieren. Zusätzlich kann die Vernetzung ebenfalls durch Ausbildung von Si-O-Si-Brükken bewirkt werden.

Gegenstand der vorliegenden Erfindung ist als Folgeprodukt des erfindungsgemäßen Terpolymerisates weiterhin auch eine wässrig-alkalische, alkoholisch-alkalische, alkoholisch-aminische oder wässrig-basische Terpolymerisat-Aufbereitung, welche durch Behandeln des erfindungsgemäßen Terpolymerisates mit wässriger oder alkoholischer Alkalimetallhydroxid-Lösung oder mit wässriger oder alkoholischer Amin-Lösung erhältlich ist. Die Behandlungsdauer beträgt dabei meist 10 bis 100 Minuten und wird üblicherweise bei 20°C bis 60°C vorgenommen. Man erhält hierbei in der Regel echte Lösungen, Emulsionen, Dispersionen oder gelartige Aufbereitungen des Terpolymerisates. Hierbei werden die Siloxan-Gruppierungen meist weitgehend zu Silikat-Gruppierungen (-SiO₃³⁻) hydrolysiert und die Dicarbonsäureanhydrid-Gruppierungen hydrolytisch zu Carboxylat-Gruppierungen (-COO-) ringgeöffnet. Letzere liegen bei Verwendung einer wässrigen Amin-Lösung teilweise oder vollständig als Carbonsäureamid-Gruppierungen vor. Als Alkalimetallhydroxid-Lösungen können hierbei insbesondere wässrige oder ethanolische Natron- oder Kalilauge verwendet werden. Als Amine können hierbei beispielsweise Monobutylamin, Diethylamim, Trimethylamin, Triethylamin, Di- oder Polyamine wie Ethylendiamin oder 3-(N,N-Dimethylamino)propylamin oder auch Alkanolamine wie Triethanolamin oder Triisopropanolamin eingesetzt werden; bei Verwendung von wässrigen Di- oder Polyaminen treten, soweit nur eine Aminfunktion reaktionsfähig ist, meist betainartige Strukturen auf. Die so erhaltene alkoholisch-alkalische bzw. alkoholisch-basische oder wässrig-alkalische bzw. wässrig-basische Terpolymerisat-Zubereitung ist in der Regel über eine längere Zeit lagerstabil.

Das nachfolgende Formelschema soll beispielhaft zwei typische Strukturen einer solchen wässrig hydrolysierten Terpolymerisat-Aufbereitung - zum einen mit wässriger Natronlauge, zum anderen mit wässrigem 3-(N,N-Dimethylamino)propylamin - veranschaulichen (PIB = Reststruktur der Polyisobuteneinheit):

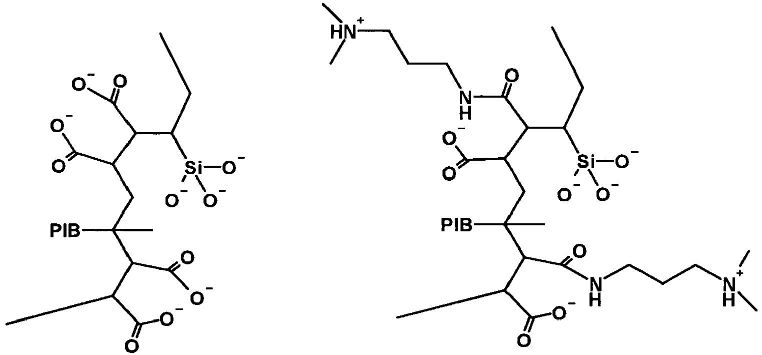

Das erfindungsgemäße Terpolymerisat und seine beschriebenen Folgeprodukte eignen sich insbesondere zur Oberflächenbehandlung von beispielsweise oxidischen Oberflächen, als Kleb- und Dichtmasse oder als Einsatzstoff für solche sowie als Polymeradditiv.

Die nachfolgenden Beispiele sollen die vorliegende Erfindung erläutern, ohne sie zu beschränken.

### Beispiel 1: Polymerisation von Maleinsäureanhydrid, Polyisobuten und Vinyltriethoxysilan

95 g (0,5 mol) Vinyltriethoxysilan, 80 ml Toluol, 50 g handelsübliches reaktives Polyisobuten mit Mₙ=1000 (Glissopal® 1000) und 50 g Maleinsäureanhydrid wurden im einem 500 ml-Vierhalskolben vorgelegt und auf 95°C Innentemperatur erhitzt. Die resultierende Reaktionsmischung wurde mit Stickstoff über ein Einleitrohr begast. 4 g tert.-Butylperoxybenzoat, gelöst in in 40 ml Toluol, wurden über 4 Stunden zugegeben. Im Verlauf der Reaktion wurde der trübe Ansatz ölig klar und homogen (Feststoffgehalt: 66 Gew.-%). Zur Aufarbeitung wurde das Lösungsmittel am Rotationsverdampfer bei 130°C und bei 500 bis 8 mbar abdestilliert. Man erhielt 115 des gewünschten Terpolymerisates in Form eines viskosen Öls, das rasch zu einem spröden, glasartigen Rückstand erstarrte, der durch ¹H-NM R-Spektroskopie charakterisierbar war.

¹H-NMR (400 MHz, 16 Scans, CDCl₃): Die Signale für Maleinsäureanhydrid (δ = 7,00 ppm) sowie die Doppelbindungen von Vinylsiloxan (δ = 6,13 ppm, 6,02 ppm und 5,90 ppm) und Polyisobuten (δ = 5,16 ppm, 4,84 ppm und 4,64 ppm) waren verschwunden. Weiterhin vorhanden waren die Signale für die Ethoxyfunktion (δ = 3,84 ppm und 1,24 ppm) und das Polyisobuten (δ = 1,42 ppm, 1,11 ppm und 0,99 ppm). Neu entstanden waren breite Signale, die der neuen Polymerkette zuzuordnen sind (δ = 3,4 ppm bis 2,4 ppm: CH₂-CH-CO; δ = 2,2 ppm bis 1,5 ppm: CH₂-CH-CO).

### Beispiele 2-13: Weitere Polymerisationsversuche

Analog zu Beispiel 1 wurden die in der nachfolgenden Tabelle zusammengestellten Polymerisationsversuche mit den dort angegebenen Mengen an Monomeren durchgeführt (MSA = Maleinsäureanhydrid; n-BA = n-Butylacrylat; Glissopal® 1000 = reaktives Polyisobuten mit Mₙ = 1000; Glissopal 2300 = reaktives Polyisobuten mit Mₙ = 2300; Oppanol® B10 = Polyisobuten mit Mₙ = 10.000; VTEOS = Vinyltriethoxysilan).

| Beispiel | MSA | n-BA | Glissopal 1000 | Glissopal 2300 | Oppanol B10 | VTEOS |
|---|---|---|---|---|---|---|
| 2 | 200 g | - | 200 g | - | - | 380 g |
| 3 | 100 g | - | 100 g | - | - | 190 g |
| 4 | 200 g | - | - | - | 340 g | 380 g |
| 5 | 20 g | - | 200 g | - | - | 38 g |
| 6 | 50 g | - | - | - | 340 g | 95 g |
| 7 | 98 g | - | 200 g | - | - | 162 g |
| 8 | 88 g | - | - | 415 g | - | 145 g |
| 9 | 98 g | - | - | 690 g | - | 142 g |
| 10 | 245 g | - | 175 g | - | - | 447 g |
| 11 | 147 g | - | 360 g | - | - | 217 g |
| 12 | 98 g | - | - | 552 g | - | 144 g |
| 13 | 35 g | 19 g | 130 g | - | - | 71 g |

### Beispiel 14: Thermische Vernetzung des Terpolymerisates aus Beispiel 1

Das in Beispiel 1 als viskoses Öl erhaltene Terpolymerisat wurde in einem Trockenschrank zwischen zwei Objektträgerplatten aus Glas 2 Stunden auf 90°C erhitzt. Dabei bildete sich ein klarer Harzfilm zwischen den Platten.

### Beispiel 15: Hydrolytische Vernetzung des Terpolymerisates aus Beispiel 1 mit Luftfeuchtigkeit

Das in Beispiel 1 als viskoses Öl erhaltene Terpolymerisat wurde offen auf einem Uhrglas für 8h Stunden an feuchter Luft bei Raumtemperatur stehen gelassen. Dabei bildete sich ein klarer, nicht-klebriger Harzfilm. Nach weiterem Stehenlassen für 3 Wochen bei Raumtemperatur wurde der Film spröde und konnte leicht vom Uhrglas entfernt werden.

### Beispiel 16: Reaktion des Terpolymerisates aus Beispiel 2 mit 3-Aminopropyl-trimethoxysilan

280 g der in Beispiel 2 erhaltenen 68 gew.-%igen Lösung des Terpolymerisates in Toluol wurden mit 27 g 3-Aminopropyl-trimethoxysilan innerhalb von 1 Stunde bei Raumtemperatur unter Rühren umgesetzt. Es fand keine Gelbildung oder Ausfällung statt. Das Reaktionsgemisch wurde mittels ¹H-NMR-Spektroskopie (400 MHz, 16 Scans, CDCl₃) untersucht: Es tauchte ein neues Signal für die Methylengruppe des Amids -CH₂-NH-CO- bei δ = 3,5 ppm auf (breit), es war kein Signal für -CH₂-NH₂ mehr zu sehen.

### Beispiel 17: Reaktion des Terpolymerisates aus Beispiel 2 mit 3-Aminopropyl-trimethoxysilan

800 g einer nach Beispiel 2 erhaltenen 68 gew.-%igen Lösung des Terpolymerisates in Toluol wurden mit 154 g 3-Aminopropyl-trimethoxysilan (verdünnt mit 100 ml Toluol) innerhalb von 1 Stunde bei Raumtemperatur unter Rühren umgesetzt. Es fand keine Gelbildung oder Ausfällung statt. Das Reaktionsgemisch wurde mittels ¹H-NMR-Spektroskopie (400 MHz, 16 Scans, CDCl₃) untersucht: Es tauchte ein neues Signal für die Methylengruppe des Amids -CH₂-NH-CO- bei δ = 3,5 ppm auf (breit), es war kein Signal für -CH₂-NH2 mehr zu sehen.

### Beispiel 18: Auflösung des Terpolymerisates aus Beispiel 2 in wässriger Natronlauge

Das in Beispiel 2 erhaltene Terpolymerisat wurde am Rotationsverdampfer vollständig vom Lösungsmittel befreit und der erhaltene feste Rückstand in der Kälte zerkleinert. 10 g des trockenen Polymerpulvers wurde in wässriger Natronlauge (2,1 g Natriumhydroxid in 35 g Wasser) während eines Zeitraumes von 100 Minuten bei Raumtemperatur aufgelöst. Die erhaltene leicht trübe Lösung ließ sich ohne Ausfällungen mit Wasser verdünnen und war für einige Tage lagerstabil. Nach Verdunsten des Wassers resultierte ein klarer Film.

### Beispiel 19: Auflösung des Terpolymerisates aus Beispiel 2 in wässrigem 3-(N,N-Dimethylamino)propylamin

Das in Beispiel 2 erhaltene Terpolymerisat wurde am Rotationsverdampfer vollständig vom Lösungsmittel befreit und der erhaltene feste Rückstand in der Kälte zerkleinert. 10 g des trockenen Polymerpulvers wurde in einer Lösung von 2,7 g 3-(N,N-Dimethyl-amino)propylamin in 35 g Wasser während eines Zeitraumes von 100 Minuten bei Raumtemperatur aufgelöst. Die erhaltene leicht trübe Lösung ließ sich ohne Ausfällungen mit Wasser verdünnen und war für einige Wochen lagerstabil. Nach Verdunsten des Wassers resultierte ein klarer Film.

## Patentansprüche

1. Terpolymerisat, erhältlich durch Copolymerisation von
(A) 1 bis 70 Gew.-% mindestens eines elektronendefizienten Olefins,
(B) 1 bis 85 Gew.-% mindestens eines Isobutenhomo- oder -copolymerisat mit einem zahlenmittleren Molekulargewicht Mₙ von 100 bis 500.000, welches an seiner olefinischen Doppelbindung nur Wasserstoffatome und/oder Kohlenstoffatome ohne elektronenziehende Substituenten trägt, und
(C) 1 bis 70 Gew.-% mindestens eines Alkoxyvinylsilans,
wobei die Summe der Gew.-% der Komponenten (A), (B) und (C) 100 Gew.-% ergibt.

2. Terpolymerisat nach Anspruch 1, erhältlich aus mindestens einem Olefin, welches an seiner olefinischen Doppelbindung mindestens einen elektronenziehenden Substituenten ausgewählt aus der Gruppe -CO-, -CN, -NO₂ und -SO₂- trägt, als Komponente (A).

3. Terpolymerisat nach Anspruch 1 oder 2, erhältlich aus mindestens einem Anhydrid einer monoethylenisch ungesättigten C₄- bis C₆-Dicarbonsäure als Komponente (A).

4. Terpolymerisat nach den Ansprüchen 1 bis 3, erhältlich aus einem Isobutenhomo- oder -copoly-merisat mit einem Gehalt an endständigen Vinyliden-Doppelbindungen von mindestens 60 Mol-% als Komponente (B).

5. Terpolymerisat nach den Ansprüchen 1 bis 4, erhältlich aus mindestens einer Verbindung der allgemeinen Formel I
R¹R²C=CR³-Si(R⁴)ₘ(OR⁵)₃₋ₘ (I)
in der m die Zahl 0, 1 oder 2 bezeichnet, R¹, R², R³, R⁴ und R⁵ gleich oder verschieden sein können und für C₁- bis C₂₀-Alkyl-, C₅- bis C₂₀-Cycloalkyl-, C₆- bis C₂₀-Aryl- oder C₇- bis C₂₀-Aralkylreste stehen, wobei R¹, R², R³ und R⁴ auch Wasserstoff bedeuten können,
als Komponente (C).

6. Terpolymerisat nach Anspruch 5, erhältlich aus mindestens einem Trialkoxyvinylsilan der allgemeinen Formel Ia
H₂C=CH-Si(OR⁵)₃ (Ia)
in der alle drei Alkoxyreste gleich sind und R⁵ die oben genannte Bedeutung hat, als Komponente (C).

7. Terpolymerisat nach den Ansprüchen 1 bis 6, erhältlich durch Copolymerisation von
(A) 5 bis 60 Gew.-% mindestens eines Anhydrides einer monoethylenisch ungesättigten C₄- bis C₆-Dicarbonsäure,
(B) 5 bis 80 Gew.% eines Isobutenhomo- oder -copolymerisates mit einem zahlenmittleren Molekulargewicht Mₙ von 100 bis 500.000, und
(C) 5 bis 60 Gew.-% mindestens eines Alkoxyvinylsilans,
wobei die Summe der Gew.-% der Komponenten (A), (B) und (C) 100 Gew.-% ergibt.

8. Terpolymerisat nach den Ansprüchen 1 bis 7 mit einem im wesentlichen alternierenden Strukturaufbau.

9. Terpolymerisat nach den Ansprüchen 1 bis 8 mit einem zahlenmittleren Molekular gewicht Mₙ von 500 bis 2.000.000.

10. Terpolymerisat nach den Ansprüchen 1 bis 9 mit einer Polydispersität von 1,5 bis 15.

11. Verfahren zur Herstellung des Terpolymerisates gemäß den Ansprüchen 1 bis 10, **dadurch gekennzeichnet, dass** man die Komponenten (A), (B) und (C) in Substanz, in Lösung oder in Suspension radikalisch miteinander copolymerisiert.

12. Thermisch vernetztes Terpolymerisat, erhältlich durch Erhitzen des Terpolymerisates gemäß den Ansprüchen 1 bis 10 auf Temperaturen über 80°C für mindestens 10 Minuten.

13. Modifiziertes und/oder vernetztes Terpolymerisat, erhältlich durch Umsetzung des Terpolymerisates gemäß den Ansprüchen 1 bis 10 mit ein- oder mehrwertigen Alkoholen und/oder ein- oder mehrwertigen Aminen.

14. Hydrolytisch vernetztes Terpolymerisat, erhältlich durch Umsetzung des Terpolymerisates gemäß den Ansprüchen 1 bis 10 mit Wasser.

15. Wässrig-alkalische, alkoholisch-alkalische, alkoholisch-aminische oder wässrigbasische Terpolymerisat-Aufbereitung, erhältlich durch Behandeln des Terpoly-merisates gemäß den Ansprüchen 1 bis 10 mit wässriger oder alkoholischer Alka-limetallhydroxid-Lösung oder mit wässriger oder alkoholischer Amin-Lösung.

## Claims

1. A terpolymer obtainable by copolymerizing
(A) 1 % to 70% by weight of at least one electron-deficient olefin,
(B) 1% to 85% by weight of at least one isobutene homopolymer or copolymer having a number-average molecular weight Mₙ of 100 to 500 000 which on its olefinic double bond carries only hydrogen atoms and/or carbon atoms without electron-withdrawing substituents, and
(C) 1 % to 70% by weight of at least one alkoxyvinylsilane,
the sum of the % by weight of components (A), (B), and (C) making 100% by weight.

2. The terpolymer according to claim 1, obtainable from at least one olefin which on its olefinic double bond carries at least one electron-withdrawing substituent selected from the group consisting of -CO-, -CN, -NO₂, and -SO₂-, as component (A).

3. The terpolymer according to claim 1 or 2, obtainable from at least one anhydride of a monoethylenically unsaturated C₄ to C₆ dicarboxylic acid as component (A).

4. The terpolymer according to any of claims 1 to 3, obtainable from an isobutene homopolymer or copolymer containing at least 60 mol% of terminal vinylidene double bonds as component (B).

5. The terpolymer according to any of claims 1 to 4, obtainable from at least one compound of the general formula I
R¹R²C=CR³-Si(R⁴)ₘ(OR⁵)₃₋ₘ (I)
in which n is the number 0, 1 or 2, R¹, R², R³, R⁴, and R⁵ may be identical or different and are C₁ to C₂₀ alkyl, C₅ to C₂₀ cycloalkyl, C₆ to C₂₀ aryl or C₇ to C₂₀ aralkyl radicals, and R¹, R², R³, and R⁴ may also be hydrogen,
as component (C).

6. The terpolymer according to claim 5, obtainable from at least one trialkoxyvinylsilane of the general formula la
H₂C=CH-Si(OR⁵)₃ (Ia)
in which all three alkoxy radicals are identical and R⁵ has the definition stated above
as component (C).

7. The terpolymer according to any of claims 1 to 6, obtainable by copolymerizing
(A) 5% to 60% by weight of at least one anhydride of a monoethylenically unsaturated C₄ to C₆ dicarboxylic acid,
(B) 5% to 80% by weight of an isobutene homopolymer or copolymer having a number-average molecular weight Mₙ of 100 to 500 000, and
(C) 5% to 60% by weight of at least one alkoxyvinylsilane,
the sum of the % by weight of components (A), (B), and (C) making 100% by weight.

8. The terpolymer according to any of claims 1 to 7, having a substantially alternating structural composition.

9. The terpolymer according to any of claims 1 to 8, having a number-average molecular weight Mₙ of 500 to 2 000 000.

10. The terpolymer according to any of claims 1 to 9, having a polydispersity of 1.5 to 15.

11. A process for preparing the terpolymer according to any of claims 1 to 10, which comprises copolymerizing components (A), (B), and (C) with one another free-radically in bulk, in solution or in suspension.

12. A thermally crosslinked terpolymer obtainable by heating the terpolymer according to any of claims 1 to 10 to temperatures above 80°C for at least 10 minutes.

13. A modified and/or crosslinked terpolymer obtainable by reacting the terpolymer according to any of claims 1 to 10 with monohydric or polyhydric alcohols and/or monofunctional or polyfunctional amines.

14. A hydrolytically crosslinked terpolymer obtainable by reacting the terpolymer according to any of claims 1 to 10 with water.

15. An aqueous-alkaline, alcoholic-alkaline, alcoholic-aminic or aqueous-basic terpolymer preparation obtainable by treating the terpolymer according to any of claims 1 to 10 with aqueous or alcoholic alkali metal hydroxide solution or with aqueous or alcoholic amine solution.

## Revendications

1. Terpolymère, pouvant être obtenu par copolymérisation de
(A) 1 à 70% en poids d'au moins une oléfine déficiente en électrons,
(B) 1 à 85% en poids d'au moins un homo- ou copolymérisat d'isobutène ayant une masse moléculaire moyenne en nombre Mₙ de 100 à 500 000, qui ne porte sur sa double liaison oléfinique que des atomes d'hydrogène et/ou des atomes de carbone sans substituants attirant les électrons, et
(C) 1 à 70% en poids d'au moins un alcoxyvinylsilane,
la somme des % en poids des composants (A), (B) et (C) étant égale à 100 % en poids.

2. Terpolymère selon la revendication 1, pouvant être obtenu à partir d'au moins une oléfine qui porte sur sa double liaison oléfinique au moins un substituant attirant les électrons, choisi dans le groupe constitué par -CO-, -CN-, -NO₂ et -SO₂-, en tant que composant (A).

3. Terpolymère selon la revendication 1 ou 2, pouvant être obtenu à partir d'au moins un anhydride d'un acide dicarboxylique en C₄-C₈ à insaturation monoéthylénique, en tant que composant (A).

4. Terpolymère selon les revendications 1 à 3, pouvant être obtenu à partir d'un homo- ou copolymérisat d'isobutène, ayant une teneur en doubles liaisons vinylidène en bout de chaîne d'au moins 60% en moles, en tant que composant (B).

5. Terpolymère selon les revendications 1 à 4, pouvant être obtenu à partir d'au moins un composé de formule générale I
R¹R²C=CR³-Si(R⁴)ₘ(OR⁵)₃₋ₘ (I)
dans laquelle m désigne le nombre 0, 1 ou 2, R¹, R², R³, R⁴ et R⁵ peuvent être identiques ou différents et représenter des radicaux alkyle en C₁-C₂₀, cycloalkyle en en C₅-C₂₀, aryle en C₆-C₂₀ ou aralkyle en C₇-C₂₀, R¹, R², R³ et R⁴ pouvant également représenter des atomes d'hydrogène,
en tant que composant (C).

6. Terpolymère selon la revendication 5, pouvant être obtenu à partir d'au moins un trialcoxyvinylsilane de formule générale Ia
H₂C=CH-Si(OR⁵)₃ (Ia)
dans laquelle les trois radicaux alcoxy sont tous identiques et R⁵ a la signification indiquée plus haut,
en tant que composant (C).

7. Terpolymère selon les revendications 1 à 6, pouvant être obtenu par copolymérisation de
(A) 5 à 60 % en poids d'au moins un anhydride d'un acide dicarboxylique en C₄-C₆ à insaturation monoéthylénique,
(B) 5 à 80 % en poids d'un homo- ou copolymérisat d'isobutène ayant une masse moléculaire moyenne en nombre Mₙ de 100 à 500 000, et
(C) 5 à 60% en poids d'au moins un alcoxyvinylsilane,
la somme des % en poids des composants (A), (B) et (C) étant égale à 100 % en poids.

8. Terpolymère selon les revendications 1 à 7, ayant une structure essentiellement alternée.

9. Terpolymère selon les revendications 1 à 8, ayant une masse moléculaire moyenne en nombre Mₙ de 500 à 2 000 000.

10. Terpolymère selon les revendications 1 à 9, ayant une polydispersité de 1,5 à 15.

11. Procédé pour la préparation du terpolymère selon les revendications 1 à 10, **caractérisé en ce qu'**on copolymérise entre eux par voie radicalaire les composants (A), (B) et (C) en masse, en solution ou en suspension.

12. Terpolymère réticulé thermiquement, pouvant être obtenu par chauffage du terpolymère selon les revendications 1 à 10, jusqu'à des températures de plus de 80 °C, pendant au moins 10 minutes.

13. Terpolymère modifié et/ou réticulé, pouvant être obtenu par mise en réaction du terpolymère selon les revendications 1 à 10 avec des alcools mono- ou polyhydriques et/ou des amines mono- ou polyfonctionnelles.

14. Terpolymère réticulé par voie hydrolytique, pouvant être obtenu par mise en réaction du terpolymère selon les revendications 1 à 10 avec de l'eau.

15. Préparation aqueuse-alcaline, alcoolique-alcaline, alcoolique-aminique ou aqueuse-basique de terpolymère, pouvant être obtenue par traitement du terpolymère selon les revendications 1 à 10 par une solution aqueuse ou alcoolique d'hydroxyde de métal alcalin ou par une solution aqueuse ou alcoolique d'amine.
